(19) Europäisches Patentamt
European Patent Office
Office européen des brevets

(11) **EP 1 394 010 B1**

(12) **EUROPÄISCHE PATENTSCHRIFT**

(45) Veröffentlichungstag und Bekanntmachung des Hinweises auf die Patenterteilung:
**23.03.2005   Patentblatt 2005/12**

(51) Int Cl.⁷: **B61D 27/00**

(21) Anmeldenummer: **03011573.7**

(22) Anmeldetag: **22.05.2003**

(54) **Verfahren zur Dichtheitsprüfung von Fahrzeugen**

Method for verifying the seals on vehicles

Procédé de vérification de l'étanchéité des véhicules

(84) Benannte Vertragsstaaten:
**AT BE BG CH CY CZ DE DK EE ES FI FR GB GR HU IE IT LI LU MC NL PT RO SE SI SK TR**

(30) Priorität: **27.08.2002   DE 10239996**

(43) Veröffentlichungstag der Anmeldung:
**03.03.2004   Patentblatt 2004/10**

(73) Patentinhaber: **DB Reise & Touristik AG**
**60326 Frankfurt (DE)**

(72) Erfinder:
• **Berlitz, Tim**
**86529 Schrobenhausen (DE)**

• **Meister, Michael**
**32457 Porta Westfalica (DE)**

(74) Vertreter: **Zinken-Sommer, Rainer**
**Deutsche Bahn AG**
**Patentabteilung**
**Völckerstrasse 5**
**80939 München (DE)**

(56) Entgegenhaltungen:
**EP-A- 0 432 669        DE-A- 3 101 983**
**US-A- 5 228 306        US-A- 5 984 773**

EP 1 394 010 B1

**Beschreibung**

Die Erfindung betrifft ein Verfahren zur Dichtheitsprüfung von Fahrzeugen, insbesondere Schienenfahrzeugen, siehe z.B. EP-A2- 0 432 669.

Eine Dichtheit von Fahrzeugen ist erforderlich, wenn Fahrzeuge mit hoher Geschwindigkeit in eine Querschnittsveränderung einfahren oder innerhalb einer Querschnittsverengung fahren. Eine solche Querschnittsveränderung stellt insbesondere die Einfahrt in einen Tunnel, die Ausfahrt aus einem Tunnel oder die Begegnung im Tunnel mit einem anderen Fahrzeug dar. Hierdurch treten im Fahrzeuginnenraum Schwankungen des Luftdruckes auf, die ab einer bestimmten Höhe von den Fahrgästen als störend empfunden werden und somit den Fahrkomfort beeinträchtigen.

Bei der Einfahrt eines Zuges in einen Tunnel dringt zunächst der Zugkopf in das Gasvolumen des Tunnels ein. Dabei muss die sich vor dem Zug befindende Luft verdrängt, d. h. bewegt werden. Diese Geschwindigkeitsänderung der Luft bedingt eine Druckänderung in Form eines Druckanstiegs, der mit der Ausbreitungsgeschwindigkeit von Störungen in Luft, der Schallgeschwindigkeit, zum anderen Tunnelportal läuft. Bei der Einfahrt des Zughecks in den Tunnel strömt die Luft in den nun wieder freien Querschnitt ein, was eine Druckabsenkung zur Folge hat, die ebenfalls mit Schallgeschwindigkeit den Tunnel durchläuft. Bei der Tunnelausfahrt des Zuges erzeugt der Zugkopf einen Druckanstieg und das Heck eine Druckabsenkung. Die beschriebenen Wellen werden an den Tunnelportalen reflektiert und kehren mit jeweils umgekehrtem Vorzeichen - also Druckanstiege als Druckabsenkungen und umgekehrt - mehrfach wieder. Man unterscheidet im Betrieb zwei Fälle:

Die Solofahrt (Tunnelfahrt eines einzelnen Zuges), die den betrieblichen Normalfall darstellt, und die Begegnungsfahrt (Begegnung zweier Züge im Tunnel), bei der die höchsten aerodynamischen Belastungen auftreten können.

Druckänderungen bei der Tunnelfahrt eines einzelnen Zuges (Solofahrt)

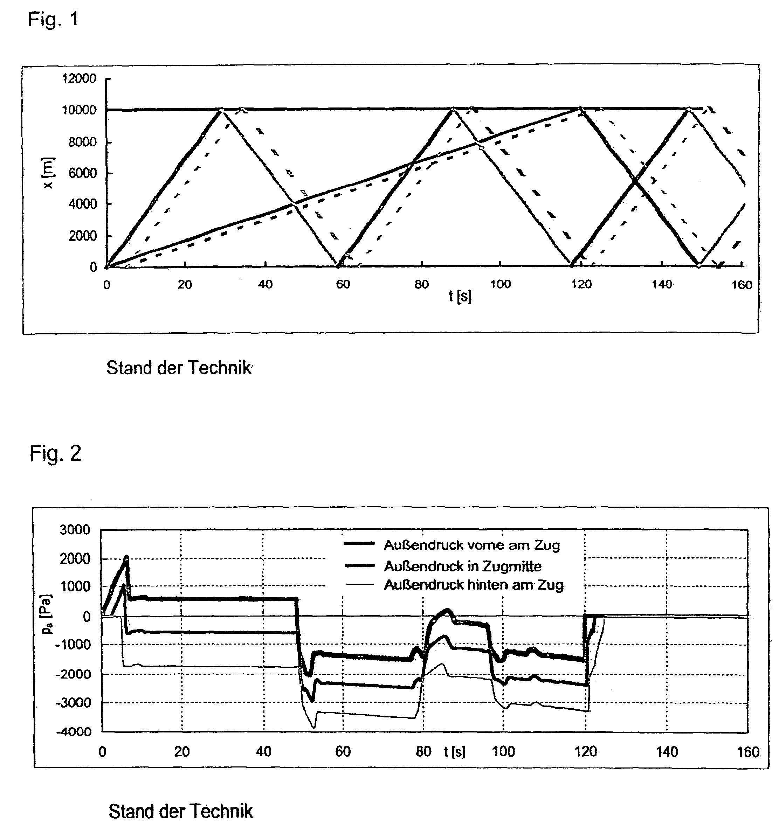

Figur 1 zeigt ein x-t Diagramm und Figur 2 ein p-t Diagramm einer begegnungsfreien Fahrt (Solofahrt) eines Zuges mit einer Geschwindigkeit von 300 km/h durch einen 10000 m langen eingleisigen Tunnel mit 60,1 m$^2$ Querschnittsfläche.

In Figur 1 wird der Zug dargestellt durch schwarze Linien für Bug (durchgezogen) und Heck (gestrichelt) im oberen Teil des Diagramms. Er wird dabei mehrfach von den, von ihm selbst erzeugten Druckwellen (graue Linien) "überrollt". Figur 2 zeigt, dass dies jedes mal eine Druckänderung außen am Zug zur Folge hat, wobei sich die Druckwerte an verschiedenen Positionen in Zuglängsachse deutlich voneinander unterscheiden.

Druckänderungen bei Zugbegegnungen im Tunnel (Begegnungsfahrt)

Fahren zwei Züge gleichzeitig oder mit zeitlichem Versatz durch einen Tunnel, so überlagern sich die bereits bei der Solofahrt vorgestellten Wellendiagramme für die Einzelfahrten. Dadurch sind im Extremfall bei der Begegnung mit einem gleichartigen und gleich schnellen Zug 2,5 bis 2,7 - fach höhere Druckänderungen als bei der Solofahrt möglich..

Druckänderungen im Fahrzeuginnenraum und Druckdifferenzen

Die zuvor beschriebenen Druckänderungen treten außen am Zug auf. Sie pflanzen sich in Abhängigkeit von der Fahrzeugdichtigkeit unterschiedlich stark in das Wageninnere fort. Für dichte Fahrzeuge ohne aktive Innendruckregelung kann der Differenzdruckverlauf p(t) zwischen Außen- und Innendruck als Funktion der Zeit t bei einem Sprung $p_0$ des Außendrucks mit zufriedenstellender Genauigkeit durch eine Exponentialfunktion beschrieben werden:

$$\Delta p(t) = \Delta p_0 \cdot e^{-\frac{t}{\tau}} \qquad (1)$$

Der Beiwert für die Druckdichtheit $\tau$ ist dabei eine fahrzeugspezifische Größe und kann als Maß für die Dichtigkeit aufgefasst werden; je höher der Wert von $\tau$, desto dichter das Fahrzeug.

Bei undichten Fahrzeugen ($\tau = 0$) folgt der Innendruckverlauf unmittelbar dem Außendruckverlauf, d.h. die Auswirkungen für die Fahrgäste sind maximal. Als Gegenmaßnahme werden die Fahrzeuge abgedichtet, die Klimaanlage geht für die Dauer der Tunnelfahrt in einen speziellen Druckschutzbetrieb über, da ansonsten die Öffnungen für die Frischluft und die Fortluft so große Undichtigkeiten" darstellen würden, dass sonstige Abdichtungsmaßnahmen sinnlos wären. Hierbei wird zwischen passivem und den aktivem Druckschutz unterschieden. Bei dem passiven Druckschutz werden die Luftein- und austrittsöffnungen der Klimaanlage durch schnell schließende Klappen verschlossen, die Klimaanlage arbeitet im reinen Umluftbetrieb. Bei dem aktiven Druckschutz fördern spezielle Lüfter unabhängig vom Außendruckverlauf permanent einen gegenüber dem Normalbetrieb verringerten Frischluftstrom in das Fahrzeug.

Die wichtigsten Auswirkungen von Abdichtungsmaßnahmen an Fahrzeugen sind:

•    die Amplituden der Druckänderungen im Fahrzeuginnenraum werden mit zunehmendem τ-Wert geringer

•    die Geschwindigkeit, mit der die Druckänderungen erfolgen (Gradiente) wird mit zunehmendem τ-Wert geringer

Beides sind Parameter, die den sog. Druckkomfort wesentlich beeinflussen. In den sog. Komfortkriterien der Deutschen Bahn AG sind die zulässigen Grenzwerte, die bei häufigen Tunneldurchfahrten nicht überschritten werden sollten, beschrieben:

Tabelle 1:

| Komfortgrenzwerte in Schienenfahrzeugen bei häufigen Tunneldurchfahrten. | |
|---|---|
| Druckänderung [Pa] | Zeitintervall [s] |
| 500 | 1 |
| 800 | $\leq 3$ |
| 1000 | $\leq 10$ |

Grundlage für das sog. Gesundheitskriterium der Deutschen Bahn AG ist der seltener auftretende Fall der Begegnungsfahrt. Hierbei darf die Druckänderung zu keiner Zeit während der Tunnelfahrt einen Wert von 10 kPa überschreiten. Dieser Grenzwert liegt sogar noch um den Faktor 2 niedriger als der Wert, den die Luftfahrtbetreiber Ihren Passagieren zumuten.

Für den sicheren und komfortablen Betrieb ist es für den Betreiber des Fahrzeuges daher wichtig zu wissen, ob der Druckkomfort für die Fahrgäste noch gewährleistet ist, oder ob das Fahrzeug z.B. bei der nächsten Revision nachgebessert d.h. abgedichtet werden muss.

Stand der Technik ist, dass zur Dichtheitsprüfung die Hochgeschwindigkeitszüge während der Revision aufgetrennt werden und jeder Wagen einzeln behandelt wird. Dazu wird jeder Wagen an den Wagenenden mit Schotts abgedichtet, mit Druck beaufschlagt und die Dichtheit über einen Druckabfall im Fahrzeuginnenraum gemessen. Nachteil diese Methode ist, dass durch das Anbringen der Schotts an den Wagenenden zusätzliche Undichtigkeiten erzeugt werden, existierende Undichtigkeiten an den Dichtflächen der Übergänge nicht erfasst werden, sie somit fehlerbehaftet und auch zeitaufwändig ist. Weiterhin ist diese Untersuchung rein zeitgesteuert (Revision), so dass bei eventuell unverändert guter Dichtheit der Wagen die Prüfung unnötigerweise vorgenommen wird.

Es ist somit Aufgabe der Erfindung, ein Verfahren anzugeben, bei dem mit geringem Aufwand zuverlässig alle Dichtheitsmängel von Fahrzeugen umgehend ermittelt werden.

Diese Aufgaben werden in Verbindung mit dem Oberbegriff des Hauptanspruches erfindungsgemäß durch die in Anspruch 1 angegebenen Merkmale gelöst. Vorteile der Erfindung gegenüber dem Stand der Technik sind, dass

1. auftretende Dichtheitsmängel sofort entdeckt werden, so dass Komforteinbußen für die Fahrgäste umgehend behoben werden können,

2. die Dichtheit des Fahrzeuges im Betrieb und damit ohne zusätzliche Maßnahmen während der Revision überprüft wird,

3. die Dichtheitsprüfung des vollständigen Fahrzeuges und damit ohne Aufteilen in die einzelnen Fahrzeugteile, insbesondere Wagen, durchgeführt werden kann.

Nach Anspruch 2 wird die Dichtheitsprüfung von einer Druckschutzeinrichtung des Fahrzeuges vorgenommen. Die für die Dichtheitsprüfung erforderlichen Daten bezüglich Luftdruck im Innen- und Außenbereich des Fahrzeuges werden durch die im Fahrzeug bereits vorhandene Druckschutzeinrichtung geliefert, insbesondere durch den passiven und den aktiven Druckschutz - bei dem passiven Druckschutz werden die Lufte in- und austrittsöffnungen der Klimaanlage durch schnell schließende Klappen verschlossen, bei dem aktiven Druckschutz fördern spezielle Lüfter unabhängig vom Außendruckverlauf permanent einen gegenüber dem Normalbetrieb verringerten Frischluftstrom in das Fahrzeug. Für die Dichtheitsprüfung müssen somit nur geringe Änderungen an bereits bestehenden Anlagen im Fahrzeug durchgeführt werden. Dieses Verfahren stellt demzufolge eine besonders kostengünstige Lösung dar.

Nach Anspruch 3 wird bei Erreichen eines unteren Komfortgrenzwertes der Druckdichtheit des Fahrzeuges vom Fahrzeug automatisch eine Meldung an ein Instandhaltungswerk gesendet. Die Dichtheitsprüfung wird somit nicht mehr wie bisher innerhalb der festgelegten Revisionsfristen rein zeitgesteuert, sondern durch eine bedarfsgesteuerte Instandhaltung durchgeführt. Dies vermeidet überflüssigen Aufwand während der Revision.

Nach Anspruch 4 wird der untere Komfortgrenzwert der Druckdichtheit angegeben, der für den Beiwert der Druckdichtheit $\tau$ bei 18 Sekunden liegt.

Nach Anspruch 5 werden durch kumulierte chronologische Ablage oder Auslesen des Beiwertes für die Druckdichtheit Informationen über die Entwicklung der Druckdichtheit des Fahrzeugs im Betrieb gewonnen. Dies ermöglicht eine zeit- und kostenoptimierte Planung der Revision der Fahrzeuge sowie einer möglichen Optimierung der Fahrzeuge hinsichtlich ihrer Druckdichtheit.

Nach Anspruch 6 werden durch das Erfassen und Abspeichern der Lastfälle Informationen über das aufgetretene Lastkollektiv, d.h. über die Belastungen, denen das Fahrzeug in seinem bisherigen Leben bzw seiner Betriebszeit seit dem letzten Auslesen des Speichers ausgesetzt war, gewonnen.

Die Verfahren nach den Ansprüchen 5 und 6 ermöglichen eine zielgerichtete Entwicklung von neuen Fahrzeugen aufgrund von detaillierten Lastenheftvorgaben. So kann hierbei auf bisher ermittelte Daten der Entwicklung der Druckdichtheit im Betrieb sowie auf das aufgetretene Lastkollektiv der bisherigen Fahrzeuge zurückgegriffen werden.

Die Erfindung wird nachfolgend anhand eines Ausführungsbeispiels erläutert.

Bei den Hochgeschwindigkeitszügen der neuesten Generation der Deutschen Bahn AG, im folgenden mit ICE 3 bezeichnet, wird der Druckschutz mit Hilfe eines passiven Systems über Klappen gewährleistet. Diese Klappen verschließen die Öffnungen der Klimaanlage des Fahrzeuges im Falle einer Einund/oder Durchfahrt des Fahrzeuges in bzw. durch eine Querschnittsveränderung und dichten das Fahrzeug somit ab. Ein Öffnen und Schließen der Klappen wird über Drucksensoren im Innenraum und im Außenraum des Fahrzeuges von einer Rechenanlage im Fahrzeug geregelt, die die Differenz der Drücke im Außen- und im Innenraum des Fahrzeuges ermittelt. Die Drucksensoren im Außenraum des Fahrzeuges sind in Bohrungen in der Außenhaut des Fahrzeuges befestigt.

Im Ausführungsbeispiel fährt der ICE 3 mit einer konstant hohen Geschwindigkeit, insbesondere 300 km/h, zunächst im Freien über ebenes Gelände. Aufgrund des konstant gleichmäßigen Luftdrucks im Außenbereich des ICE 3 sind die Klappen des Druckschutzsystems geöffnet, so dass ein Gleichgewicht zwischen dem Luftdruck im Außenraum und im Innenraum des Fahrzeuges herrscht. Bei Einfahrt in einen Tunnel kommt es nun zu einer plötzlichen Druckveränderung im Außenraum des Fahrzeuges, die Klappen des Druckschutzsystems werden geschlossen. Aufgrund der Dichtheit des Fahrzeuges ist somit gewährleistet, dass sich der Druck im Innenraum des Fahrzeuges nach Gleichung (1) nur langsam an den veränderten Druck im Außenraum des Fahrzeuges anpasst. Dieser Anpassungsvorgang wird von der Rechenanlage des Fahrzeuges erfasst und den Beiwert für die Druckdichtheit $\tau$ ermittelt. Unterschreitet der ermittelte Beiwert für die Druckdichtheit $\tau$ einen bestimmten Komfortgrenzwert, ist insbesondere $\tau < 18$ s, so ist das Fahrzeug undicht. Ist das Fahrzeug undicht, so gibt die Rechenanlage über eine Fahrzeugkommunikationsanlage eine Meldung an ein Instandhaltungswerk ab, das eine umgehende Überprüfung des Fahrzeuges veranlasst.

**Patentansprüche**

1. Verfahren zur Dichtheitsprüfung von Fahrzeugen, bei dem die Abdichtung eines Luftvolumens des Fahrzeuginnenraumes gegenüber einem Luftvolumen des Fahrzeugaußenraums überprüft wird, **dadurch gekennzeichnet, dass** die Dichtheitsprüfung im laufenden Betrieb bei Ein- und/oder Durchfahrt des Fahrzeuges in bzw. durch eine Querschnittsveränderung durchgeführt wird, wobei ein Maß für die Druckdichtheit des Fahrzeuges eine Zeitverzögerung ist, in der der Luftdruck im Fahrzeuginnenraum dem durch die Querschnittsveränderung veränderten Luftdruck im Fahrzeugaußenraum folgt.

2. Verfahren zur Dichtheitsprüfung nach Anspruch 1, **dadurch gekennzeichnet, dass** die Dichtheitsprüfung von einer Druckschutzeinrichtung des Fahrzeuges vorgenommen wird.

3. Verfahren zur Dichtheitsprüfung nach einem oder mehreren der Ansprüche 1 bis 2, **dadurch gekennzeichnet, dass** bei Unterschreitung eines unteren Komfortgrenzwertes der Druckdichtheit des Fahrzeuges das Fahrzeug automatisch eine Meldung an ein Instandhaltungswerk sendet.

4. Verfahren zur Dichtheitsprüfung nach Anspruch 3, **dadurch gekennzeichnet, dass** der untere Komfortgrenzwert der Druckdichtheit für den Beiwert der Druckdichtheit $\tau$ - insbesondere bei Fahrzeugen des Hochgeschwindigkeitsverkehrs - bei 18 Sekunden liegt.

**5.** Verfahren zur Dichtheitsprüfung nach einem oder mehreren der Ansprüche 1 bis 4, **dadurch gekennzeichnet, dass** durch kumulierte chronologische Ablage oder Auslesen eines Beiwertes für die Druckdichtheit Informationen über die Entwicklung der Druckdichtheit des Fahrzeugs im Betrieb gewonnen werden.

**6.** Verfahren zur Dichtheitsprüfung nach einem oder mehreren der Ansprüche 1 bis 5 **dadurch gekennzeichnet, dass** durch ein Erfassen und Abspeichern von Lastfällen Informationen über ein aufgetretenes Lastkollektiv, d.h. über Belastungen, denen das Fahrzeug in seinem bisherigen Leben bzw. seiner Betriebszeit seit einem letzten Auslesen des Speichers ausgesetzt war, gewonnen werden.

## Claims

**1.** A method for checking the tightness of vehicles, wherein the tightness of the air volume in the vehicle interior relative to the air volume of the vehicle exterior is checked, **characterized in that** the tightness check is carried out during the operation of the vehicle while entering and/or traveling through a track section of different cross section, wherein the pressure tightness of the vehicle is quantified in the form of a time delay, during which the air pressure of the vehicle interior is adapted to the air pressure of the vehicle exterior that was changed due to the change to a track section of different cross section.

**2.** The tightness check method according to Claim 1, **characterized in that** the tightness check is carried out by a pressure protection device of the vehicle.

**3.** The tightness check method according to Claim 1 and/or 2, **characterized in that** the vehicle automatically transmits a message to the maintenance department if the pressure tightness of the vehicle falls short of a lower comfort limit.

**4.** The tightness check method according to Claim 3, **characterized in that** the lower comfort limit of the pressure tightness lies at 18 seconds for the coefficient of pressure tightness $\tau$-particularly for vehicles used in high-speed traffic.

**5.** The tightness check method according to at least one of Claims 1-4, **characterized in that** information on the development of the pressure tightness of the vehicle during its operation is obtained by means of cumulated chronological storage and read-out of the coefficient for the pressure tightness.

**6.** The tightness check method according to at least one of Claims 1-5, **characterized in that** information on the past load collective, i.e., on the stresses to which the vehicle was subjected since its commissioning or since the last memory read-out, is obtained by measuring and storing load cases.

## Revendications

**1.** Procédé de contrôle d'étanchéité de véhicules, dans lequel l'étanchéité d'un volume d'air de l'habitacle du véhicule par rapport à un volume d'air de l'extérieur du véhicule est contrôlée, **caractérisé en ce que** le contrôle d'étanchéité est réalisé en cours de fonctionnement lors de l'entrée et/ou du passage du véhicule dans ou à travers une section transversale modifiée, un indice d'étanchéité à la pression du véhicule étant constitué par un retardement avec lequel la pression d'air dans l'habitacle du véhicule se conforme à la pression d'air modifiée du fait de la modification de section transversale à l'extérieur du véhicule.

**2.** Procédé de contrôle d'étanchéité selon la revendication 1, **caractérisé en ce que** le contrôle d'étanchéité est assuré par un dispositif de protection contre la pression du véhicule.

**3.** Procédé de contrôle d'étanchéité selon l'une quelconque ou plusieurs des revendication 1 à 2, **caractérisé en ce qu'**en cas de non-atteinte d'une valeur limite inférieure de confort de l'étanchéité à la pression du véhicule, le véhicule envoie automatiquement un message à une unité de maintenance.

**4.** Procédé de contrôle d'étanchéité selon la revendication 3, **caractérisé en ce que** la valeur limite inférieure de confort de l'étanchéité à la pression pour le coefficient d'étanchéité à la pression $\tau$ -notamment pour les véhicules du trafic à grande vitesse- est de 18 secondes.

**5.** Procédé de contrôle d'étanchéité selon l'une quelconque ou plusieurs des revendication 1 à 4, **caractérisé en ce que**, par classement chronologique cumulé ou consultation d'un coefficient d'étanchéité à la pression, des informations sur l'évolution de l'étanchéité à la pression du véhicule sont récupérées en cours de fonctionnement.

**6.** Procédé de contrôle d'étanchéité selon l'une quelconque ou plusieurs des revendication 1 à 5, **caractérisé en ce que**, par enregistrement et sauvegarde des cas de charge, des informations sur un collectif de charge survenu, c'est-à-dire sur des sollicitations auxquelles le véhicule a été exposé au cours de son existence jusqu'à ce moment ou au cours de son temps de fonctionnement depuis une dernière consultation de la mémoire, sont récupérées.

Fig. 1

Stand der Technik

Fig. 2

Stand der Technik